# EUROPEAN PATENT SPECIFICATION

(11) **EP 3 451 159 B1**
(45) Date of publication and mention of the grant of the patent: **26.05.2021**
(21) Application number: 16899915.9
(22) Date of filing: 10.05.2016
(51) Int. Cl.: G06F 9/30

(54) **APPARATUS AND METHOD FOR PERFORMING VECTOR LOGICAL OPERATION**
VORRICHTUNG UND VERFAHREN ZUR DURCHFÜHRUNG VON LOGISCHEN VEKTOROPERATIONEN
APPAREIL ET PROCÉDÉ PERMETTANT DE METTRE EN OEUVRE UNE OPÉRATION LOGIQUE VECTORIELLE

(30) Priority: 26.04.2016 CN 201610267024
(43) Date of publication of application: 06.03.2019
(73) Proprietor: Cambricon Technologies Corporation Limited, Beijing 100190 (CN)
(72) Inventor: LUO, Tao, Beijing 100190 (CN); ZHI, Tian, Beijing 100190 (CN); LIU, Shaoli, Beijing 100190 (CN); CHEN, Tianshi, Beijing 100190 (CN); CHEN, Yunji, Beijing 100190 (CN)
(74) Representative: AWA Sweden AB
(86) International application number: PCT/CN2016/081525
(87) International publication number: WO 2017/185404

(56) References cited:
- WO-A1-2013/058695
- WO-A1-2015/052485
- CN-A- 1 349 159
- CN-A- 102 156 637
- CN-B- 102 262 525
- US-A- 5 838 984

## Description

### TECHNICAL FIELD

The disclosure relates to a vector logical operation device and method for efficiently and flexibly performing a vector logical operation according to a vector logical operation instruction, which can well solve the problem that more and more algorithms, in the current computer field, contain a large number of vector logical operations.

### BACKGROUND

In the current computer field, more and more algorithms are now involving vector operations. Taking machine learning algorithms (i.e., mainstream algorithms of artificial intelligence in popular application fields) as an example, almost all existing classical algorithms of the machine learning algorithms contain a large number of vector logical operations related to the disclosure. The vector logical operation can be a vector AND vector (VAV) operation, a vector AND (VAND) operation, a vector OR vector (VOV) operation, or a vector OR (VOR) operation. As an example, for two vectors *a* = [*a*₁, *a*₂,*..., a*ₙ] and *b* = [*b*₁, *b*₂,..., *b*ₙ]*,* a vector AND vector (VAV) operation of the vectors *a* and *b* is defined as [*a*₁*&b*₁*, a*₂*&b*₂, ..., *a*ₙ*&b*ₙ]*,* a vector AND (VAND) operation of the vector *a* is defined as *a*₁*&a*₂*&...&a*ₙ*,* a vector OR vector (VOV) operation of the vectors *a* and *b* is defined as [*a*₁||*b*₁, *a*₂||*b*₂,*..., a*ₙ||*b*ₙ], and a vector OR (VOR) operation of the vector *a* is defined as *a*₁||*a*₂||...||*a*ₙ.

In the related art, one solution to conduct a vector logical operation is to use general-purpose processors by executing general instructions via general-purpose register files and general-purpose functional units to perform a vector logical operation. However, one defect of the solution is the low operation performance during a vector logical operation because a single general-purpose processor is primarily used for scalar calculations. On the other hand, adopting multiple general-purpose processors for concurrent execution may lead to a possible performance bottleneck resulting from the intercommunication among the multiple general-purpose processors. In another related art, a vector calculation is conducted by adopting a graphics processing unit (GPU), where general-purpose register files and general-purpose stream processing units are configured to execute general single instruction multiple data (SIMD) instructions, thereby performing a vector logical operation. Nonetheless, in the above-mentioned solution, GPU's on-chip small cache in performing large-scale vector logical operations requires a constant transportation of off-chip data, which makes off-chip bandwidth a main performance bottleneck. In another related art, a specialized vector logical operation device is adopted to perform vector calculations, where customized register files and processing units are used to perform a vector logical operation. Limited by the register files, however, the present specialized vector logical operation device is unable to flexibly support logical operations of vectors of different lengths. WO2013058695 discloses a vector execution unit with a vector controller and a pipeline with instruction unit for storing therein vector instructions to be executed.

### SUMMARY

### (1)Technical problems to be solved

The disclosure aims to provide a vector logical operation device and method to solve the problems existing in the related art, such as limited inter-chip communication, insufficient on-chip cache, and inflexible supported vector length.

### (2)Technical solutions

The disclosure provides a vector logical operation device, which is configured to perform a vector logical operation according to a vector logical operation instruction. The device includes a storage unit, a register unit, and a vector logical operation unit.

The storage unit is configured to store vectors.

The register unit is configured to store vector addresses, where the vector addresses are addresses of the vectors stored in the storage unit.

The vector logical operation unit is configured to acquire the vector logical operation instruction, to acquire vector addresses from the register unit according to the vector logical operation instruction, to acquire vectors from the storage unit according to the vector addresses acquired, and to perform the vector logical operation on the vectors acquired to obtain a result of the vector logical operation.

The disclosure further provides a vector logical operation method, which is configured to perform a vector logical operation according to a vector logical operation instruction. The method includes the following operations.

At S1, vectors are stored.

At S2, vector addresses are stored.

At S3, the vector logical operation instruction is acquired, vector addresses are acquired according to the vector logical operation instruction, vectors are acquired according to the vector addresses acquired, and the vector logical operation is performed on the vectors acquired, to obtain a result of the vector logical operation.

### (3)Advantageous effects

According to the vector logical operation device and method of the disclosure, vector data involved in calculation can be temporarily stored into a scratchpad memory. In the case of only transmitting a same instruction, data of different widths can be supported more flexibly and effectively in the vector logical operation unit, and correlation problems in data storing can be solved, therefore an execution performance of a task including a large number of vector calculations can be improved. In addition, an instruction set adopted by the disclosure is convenient to use and flexible in supporting vectors of different lengths.

The disclosure can be applied to the following (including but not limited to) scenarios: a data processing device, a robot, a computer, a printer, a scanner, a telephone, a tablet, a smart terminal, a mobile phone, a driving recorder, a navigator, a sensor, a webcam, a cloud server, a camera, a video camera, a projector, a watch, headphones, a mobile storage, a wearable device, and other electronic products; an airplane, a ship, a car, and other vehicles; a television (TV), an air conditioner, a microwave oven, a refrigerator, an electric cooker, a humidifier, a washing machine, an electric lamp, a gas stove, a hood, and other home appliances; a nuclear magnetic resonance spectrometer, a B-ultrasonic, an electrocardiograph, and other medical equipment.

### BRIEF DESCRIPTION OF THE DRAWINGS

FIG. 1 is a schematic structural diagram illustrating a vector logical operation device according to an embodiment of the present disclosure.
FIG. 2 is a schematic diagram of the format of an instruction set according to an embodiment of the present disclosure.
FIG. 3 is a schematic structural diagram illustrating a vector logical operation device according to an embodiment of the present disclosure.
FIG. 4 is a schematic flow diagram illustrating a method for performing a vector logical operation instruction through a vector logical operation device according to an embodiment of the present disclosure.
FIG. 5 is a schematic structural diagram illustrating a vector logical operation unit according to an embodiment of the present disclosure.

### DETAILED DESCRIPTION

The disclosure provides a vector logical operation device and a corresponding instruction set. The device includes a storage unit, a register unit, and a vector logical operation unit. The storage unit is configured to store vectors. The register unit is configured to store addresses of the vectors stored. The vector logical operation unit is configured to acquire vector addresses from the register unit according to a vector logical operation instruction, to acquire vectors from the storage unit according to the vector addresses acquired, and to perform a vector logical operation on the vectors acquired to obtain a result of the vector logical operation. According to the disclosure, vector data involved in calculation can be temporarily stored into a scratchpad memory, so that data of different widths can be supported more flexibly and effectively in a vector logical operation process, and it is possible to improve an execution performance of a task including a large number of vector calculations.

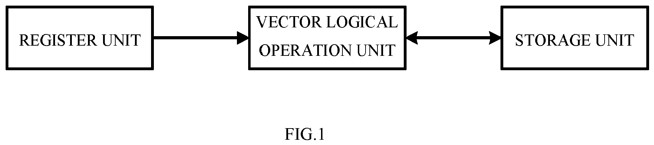

FIG. 1 is a schematic structural diagram illustrating a vector logical operation device according to an embodiment of the present disclosure. As illustrated in FIG. 1, the device includes a storage unit, a register unit, and a vector logical operation unit.

The storage unit is configured to store vectors. In one implementation, the storage unit can be a scratchpad memory capable of supporting vector data of different sizes. The disclosure is able to temporarily store required calculation data into a scratchpad memory, to enable the operation device to more flexibly and effectively support data of different widths during vector logical operations. It may be understood that, the storage unit includes, but is not limited to, a variety of different memory devices, such as a static random access memory (SRAM), an enhanced dynamic random access memory (eDRAM), a dynamic random access memory (DRAM), a memristor, a 3D-DRAM, a non-transitory memory, or the like.

The register unit is configured to store vector addresses, where the vector addresses are addresses of the vectors stored in the storage unit. In one implementation, the register unit can be a scalar register file, to provide scalar registers required for an operation. It should be noted that, the scalar register can store vector addresses.

The vector logical operation unit is configured to acquire a vector logical operation instruction, to acquire vector addresses from the register unit according to the vector logical operation instruction, to acquire vectors from the storage unit according to the vector addresses acquired, to perform a vector logical operation on the vectors acquired to obtain a result of the vector logical operation, and to store the result of the vector logical operation into the storage unit. In an implementation, the vector logical operation unit includes a vector AND vector (VAV) section, a vector AND (VAND) section, a vector OR vector (VOV) section, and a vector OR (VOR) section. In another implementation, the vector logical operation unit has a structure of multiple-stage pipeline, where the vector AND vector (VAV) section and the vector OR vector (VOV) section are arranged in a first stage pipeline, and the vector AND (VAND) section and the vector OR (VOR) section are arranged in a second stage pipeline. Due to the fact that the sections mentioned-above are arranged in different pipeline stages, when sequential order of successive serial multiple vector logical operation instructions is consistent with sequential order of pipeline stages of corresponding sections, operations as demanded by the serial multiple vector logical operation instructions can be implemented more efficiently.

According to one implementation of the disclosure, the vector logical operation device further includes an instruction cache unit. The instruction cache unit is configured to store vector logical operation instructions to be executed. It should be understood that, one instruction (for example, a vector logical operation instruction) will be cached in the instruction cache unit while being executed. When execution of an instruction is completed, if the instruction is also the earliest one among instructions that have not been submitted and are in the instruction cache unit, the instruction will be submitted. Once the instruction above is submitted, status change of the device (i.e., the vector logical operation device) caused by operations performed by the instruction cannot be cancelled. In an implementation, the instruction cache unit can be a reordering cache.

According to one implementation of the disclosure, the vector logical operation device further includes an instruction processing unit. The instruction processing unit is configured to acquire a vector logical operation instruction from the instruction cache unit, to process the vector logical operation instruction acquired, and to provide the vector logical operation instruction processed for the vector logical operation unit. In an implementation, the instruction processing unit includes an instruction fetching module, a decoding module, and an instruction queue.

The instruction fetching module is configured to acquire the vector logical operation instruction from the instruction cache unit.

The decoding module is configured to decode the vector logical operation instruction acquired from the instruction cache unit.

The instruction queue is configured to sequentially store the vector logical operation instruction decoded, and, considering that different instructions may have dependency relationships on registers included, to cache the vector logical operation instruction decoded and then to send the vector logical operation instruction cached when a dependency relationship is eliminated.

According to one implementation of the disclosure, the vector logical operation device further includes a dependency relationship processing unit. The dependency relationship processing unit is configured to: determine whether the vector logical operation instruction accesses the same vector as a previous vector logical operation instruction (in other words, determine whether the vector logical operation instruction and a previous vector logical operation instruction access a same vector), before the vector logical operation unit acquires the vector logical operation instruction; and store the vector logical operation instruction into a storage queue based on a determination that the vector logical operation instruction accesses the same vector as the previous vector logical operation instruction, and provide the vector logical operation instruction in the storage queue for the vector logical operation unit after execution of the previous vector logical operation instruction is completed; or provide the vector logical operation instruction for the vector logical operation unit directly, based on a determination that the vector logical operation instruction does not access the same vector as the previous vector logical operation instruction. As an example, when the vector logical operation instruction (i.e., a current vector logical operation instruction) accesses a scratchpad memory, the previous vector logical operation instruction and the vector logical operation instruction may access a same memory space. In order to ensure the correctness of an execution result of the vector logical operation instruction, if data of the current vector logical operation instruction is detected to have a dependency relationship with data of the previous vector logical operation instruction, the vector logical operation instruction must wait within the storage queue until the dependency relationship is eliminated.

According to one implementation of the disclosure, the vector logical operation device further includes an input/output (I/O) unit. The I/O unit is configured to store the vectors into the storage unit, or to acquire the result of the vector logical operation from the storage unit. In an implementation, the I/O unit can be a direct storage unit and responsible for reading vector data from a memory or writing vector data into the memory.

The disclosure further provides a vector logical operation method, which is configured to perform a vector logical operation according to a vector logical operation instruction. The method includes the following operations.

At S1, vectors are stored.

At S2, vector addresses (i.e., addresses of the vectors stored) are stored, and the vector addresses indicate positions of the vectors stored of the operation S1.

At S3, the vector logical operation instruction is acquired, vector addresses are acquired according to the vector logical operation instruction, vectors are acquired according to the vector addresses acquired, and the vector logical operation is performed on the vectors acquired to obtain a result of the vector logical operation.

According to one implementation of the disclosure, the method further includes the follows prior to the operation S3.

Vector logical operation instructions are stored.

A vector logical operation instruction is acquired from the vector logical operation instructions stored.

The vector logical operation instruction acquired is decoded.

The vector logical operation instruction decoded is sequentially stored.

According to one implementation of the disclosure, the method further includes the follows prior to the operation S3.

Whether the vector logical operation instruction accesses the same vector as a previous vector logical operation instruction is determined (in other words, whether the vector logical operation instruction and a previous vector logical operation instruction access a same vector is determined). When the vector logical operation instruction accesses the same vector as the previous vector logical operation instruction, store the vector logical operation instruction into a storage queue, and advance to the operation S3 after execution of the previous vector logical operation instruction is completed; otherwise, advance to the operation S3 directly.

According to one implementation of the disclosure, the method further includes an operation of storing the result of the vector logical operation.

According to one implementation of the disclosure, the operation S1 includes an operation of storing the vectors into a scratchpad memory.

According to one implementation of the disclosure, the vector logical operation instruction includes an operation code and at least one operation field, where the operation code is configured to indicate a function of the vector logical operation instruction, and the operation field is configured to indicate data information of the vector logical operation instruction.

According to one implementation of the disclosure, the vector logical operation includes a vector AND vector (VAV) operation, a vector AND (VAND) operation, a vector OR vector (VOV) operation, and a vector OR (VOR) operation.

According to one implementation of the disclosure, a vector logical operation unit has a structure of multiple-stage pipeline, and the structure of multiple-stage pipeline includes a first stage pipeline and a second stage pipeline. In an implementation, the vector AND vector (VAV) operation and the vector OR vector (VOV) operation are performed at the first stage pipeline, and the vector AND (VAND) operation and the vector OR (VOR) operation are performed at the second stage pipeline.

According to one implementation of the disclosure, the instruction set adopts fixed length instructions.

In the process of performing a vector logical operation, the vector logical operation device fetches a vector logical operation instruction for decoding, and then sends the vector logical operation instruction decoded to the instruction queue for storing. The vector logical operation device acquires parameters of the vector logical operation instruction stored according to a decoding result. In an implementation, the parameters can be parameters which are directly written in an operation field of the vector logical operation instruction, or can be parameters which are read from a specified register according to a register number of the operation field of the vector logical operation instruction. One advantage of using a register to store the parameters is that there is no need to change the vector logical operation instruction itself. As long as values of the register are changed by the vector logical operation instruction, most of loops can be realized, which greatly saves the number of instructions required to solve some practical problems. Whether the vector logical operation instruction is immediately sent to the vector logical operation unit can be determined according to a result determined by the dependency relationship processing unit (i.e., "data required by the vector logical operation instruction has a dependency relationship with data required by the previous vector logical operation instruction" or "data required by the vector logical operation instruction does not have a dependency relationship with data required by the previous vector logical operation instruction"). Once a dependency relationship is found between data of the vector logical operation instruction and data of the previous vector logical operation instruction, the vector logical operation instruction must wait until execution of the depended previous vector logical operation instruction is completed, and then the vector logical operation instruction can be sent to the vector logical operation unit for execution. In a specialized operation unit, the vector logical operation instruction will be executed quickly, and a result (i.e., a result of a vector logical operation) is written back to an address provided by the vector logical operation instruction. In this situation, execution of the vector logical operation instruction is completed.

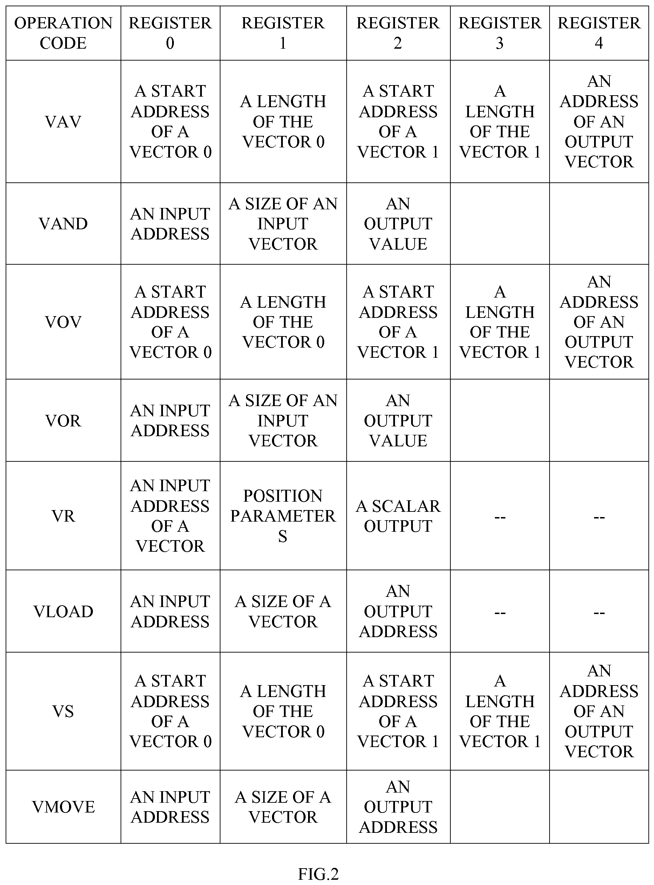

FIG. 2 is a schematic diagram of the format of an instruction set according to an embodiment of the present disclosure. As illustrated in FIG. 2, a vector logical operation instruction includes an operation code and at least one operation field. The operation code is configured to indicate a function of the vector logical operation instruction, and a vector logical operation unit can perform a vector logical operation by identifying the operation code. The operation field is configured to indicate data information of the vector logical operation instruction, where the data information can be immediate data or a register number. For example, to acquire a vector, a start address and a length of the vector can be obtained from a register according to a register number (in other words, a register unit number), and then the vector stored in a corresponding address can be obtained from the storage unit according to the start address and the length of the vector.

The instruction set contains vector logical operation instructions different in functions. The vector logical operation instruction includes, but is not limited to, a vector AND vector (VAV) instruction, a vector AND (VAND) instruction, a vector OR vector (VOV) instruction, a vector OR (VOR) instruction, a vector retrieval (VR) instruction, a vector load (VLOAD) instruction, a vector storage (VS) instruction, and a vector movement (VMOVE) instruction.

For the vector AND vector (VAV) instruction, a device (for example, a vector logical operation device) is configured to respectively retrieve two blocks of vector data of a specified size from specified addresses of a scratchpad memory. Then, in a vector operation unit, a contrapuntal AND operation is performed on two vectors. Finally, a result is written back into a specified address of the scratchpad memory.

For the vector AND (VAND) instruction, a device is configured to retrieve vector data of a specified size from a specified address of a scratchpad memory. Then, in a vector operation unit, an AND operation is performed on each element of a vector. Finally, a result is written back into a specified address of a scalar register file.

For the vector OR vector (VOV) instruction, a device is configured to respectively retrieve two blocks of vector data of a specified size from specified addresses of a scratchpad memory. Then, in a vector operation unit, a contrapuntal OR operation is performed on two vectors. Finally, a result is written back into a specified address of the scratchpad memory.

For the vector OR (VOR) instruction, a device is configured to retrieve vector data of a specified size from a specified address of a scratchpad memory. Then, an OR operation on each element of a vector is performed in a vector operation unit. Finally, a result is written back into a specified address of a scalar register file.

For the vector retrieval (VR) instruction, a device is configured to retrieve vector data of a specified size from a specified address of a scratchpad memory. Then, in a vector calculation unit, an element of a vector is extracted according to a specified position to serve as an output. Finally, a result is written back into a specified address of a scalar register file.

For the vector load (VLOAD) instruction, a device is configured to load vector data of a specified size from a specified external source address to a specified address of a scratchpad memory.

For the vector storage (VS) instruction, a device is configured to store vector data of a specified size from a specified address of a scratchpad memory into an external destination address.

For the vector movement (VMOVE) instruction, a device is configured to store (in other words, move) vector data of a specified size from a specified address of a scratchpad memory into another specified address of the scratchpad memory.

To illustrate objects, technical solutions, and advantageous effects of the disclosure more clearly, the disclosure will be further described in detail below with reference to specific embodiments of the disclosure and accompanying drawings.

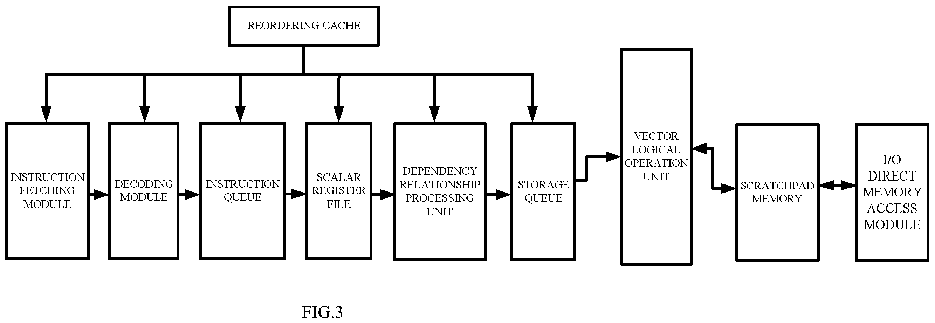

FIG. 3 is a schematic structural diagram illustrating a vector logical operation device according to an embodiment of the present disclosure. As illustrated in FIG. 3, the vector logical operation device includes an instruction fetching module, a decoding module, an instruction queue, a scalar register file, a dependency relationship processing unit, a storage queue, a reordering cache, a vector logical operation unit, a scratchpad memory, and an input/output (I/O) direct memory access module.

The instruction fetching module is configured to fetch a next instruction (i.e., a vector logical operation instruction) to be executed from an instruction sequence, and to transmit the instruction fetched to the decoding module.

The decoding module is configured to decode the instruction transmitted and to transmit the instruction decoded to the instruction queue.

Considering that different instructions may have dependency relationships on scalar registers included, the instruction queue is configured to cache the instruction decoded, and to transmit the instruction cached when a dependency relationship is eliminated.

The scalar register file is configured to provide scalar registers required by the vector logical operation device during an operation.

For the dependency relationship processing unit, a vector logical operation instruction (also known as a current instruction) processed by the dependency relationship processing unit may have a dependency relationship with a previous vector logical operation instruction (also known as a previous instruction). When the vector logical operation instruction accesses a scratchpad memory, the previous vector logical operation instruction and the vector logical operation instruction may access a same memory space. In order to ensure the correctness of an execution result of the vector logical operation instruction, if data of the vector logical operation instruction is detected to have a dependency relationship with data of the previous vector logical operation instruction, the vector logical operation instruction must wait within the storage queue until the dependency relationship is eliminated.

The storage queue is a sequential queue, when the data of the vector logical operation instruction has a dependency relationship with the data of the previous vector logical operation instruction, the vector logical operation instruction will be stored in the storage queue until the dependency relationship is eliminated.

For the reordering cache, the vector logical operation instruction is cached in the reordering cache while being executed. When execution of a vector logical operation instruction is completed, if the vector logical operation instruction is also the earliest one among instructions that have not been submitted and are in the reordering cache, the vector logical operation instruction will be submitted. Once the vector logical operation instruction is submitted, status change of the vector logical operation device caused by operations performed by the vector logical operation instruction cannot be cancelled.

The vector logical operation unit is responsible for all vector logical operations of the vector logical operation device, and the vector logical operation instruction is sent to the vector logical operation unit for execution.

The scratchpad memory is a temporary storage device dedicated to vector data, and can support vector data of different sizes.

The I/O direct memory access module is configured to directly access the scratchpad memory and responsible for reading data from or writing data into the scratchpad memory.

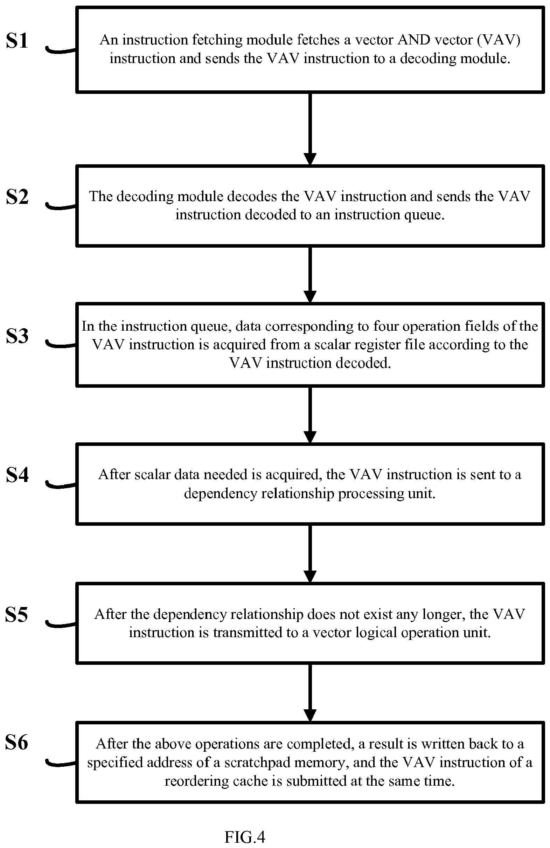

FIG. 4 is a schematic flow diagram illustrating a method for performing a vector AND vector instruction through a vector logical operation device according to an embodiment of the present disclosure. As illustrated in FIG. 4, a manner of performing the vector AND vector instruction is as follows.

At S 1, an instruction fetching module fetches the vector AND vector (called as VAV for short) instruction, and sends the VAV instruction to a decoding module.

At S2, the decoding module decodes the VAV instruction, and sends the VAV instruction decoded to an instruction queue.

At S3, in the instruction queue, data corresponding to four operation fields of the VAV instruction is acquired from a scalar register file according to the VAV instruction decoded. In an implementation, the data acquired from the scalar register file includes a start address of a vector *vin*₀*,* a length of the vector *vin*₀*,* a start address of a vector *vin*₁, and a length of the vector *vin*₁*.*

At S4, after scalar data needed is acquired, the VAV instruction is sent to a dependency relationship processing unit. The dependency relationship processing unit analyzes whether there is a dependency relationship between data of the VAV instruction and data of an uncompleted previous vector AND vector (VAV) instruction. The VAV instruction needs to wait (in other words, the VAV instruction is cached) in a storage queue until there is no dependency relationship between the data of the VAV instruction and the data of the uncompleted previous VAV instruction.

At S5, after the dependency relationship between the data of the VAV instruction and the data of the uncompleted previous VAV instruction does not exist any longer, the VAV instruction is transmitted to a vector logical operation unit. The vector logical operation unit retrieves needed vectors from a scratchpad memory according to addresses and lengths of needed data, and then a vector AND vector (VAV) operation is performed in the vector logical operation unit.

At S6, after the above operations are completed, a result is written back to a specified address of the scratchpad memory, and the VAV instruction of a reordering cache is submitted at the same time.

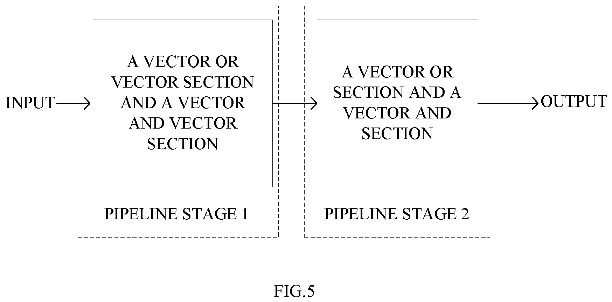

FIG. 5 is a schematic structural diagram illustrating a vector logical operation unit according to an embodiment of the present disclosure. As illustrated in FIG. 5, the vector logical operation unit includes a vector AND vector (VAV) section, a vector AND (VAND) section, a vector OR vector (VOV) section, and a vector OR (VOR) section. Meanwhile, the vector logical operation unit has a structure of multiple-stage pipeline, where the vector AND vector (VAV) section and the vector OR vector (VOV) section are arranged at a pipeline stage 1, and the vector AND (VAND) section and the vector OR (VOR) section are arranged at a pipeline stage 2. Since these sections are arranged in different pipeline stages, when sequential order of successive serial multiple vector logical operations is consistent with sequential order of pipeline stages of corresponding sections, operations as demanded by the series of vector logical operation instructions can be achieved more effectively.

Although the objects, technical solutions and advantageous effects of the present disclosure has been described in detail according to certain embodiments, it should be understood that the disclosure is not to be limited to the disclosed embodiments but, on the contrary, is intended to cover various modifications and equivalent arrangements included within the scope of the appended claims, which scope is to be accorded the broadest interpretation so as to encompass all such modifications and equivalent structures as is permitted under the law.

## Claims

1. A vector logical operation device, configured to perform a vector logical operation according to a vector logical operation instruction, the device comprising:
a storage unit, configured to store vectors;
a register unit, configured to store vector addresses, wherein the vector addresses are addresses of the vectors stored in the storage unit; and
a vector logical operation unit, configured to acquire the vector logical operation instruction, to acquire vector addresses from the register unit according to the vector logical operation instruction, to acquire vectors from the storage unit according to the vector addresses acquired, and to perform the vector logical operation on the vectors acquired to obtain a result of the vector logical operation;
wherein the vector logical operation instruction comprises an operation code and at least one operation field;
wherein the operation code is configured to indicate a function of the vector logical operation instruction; and
wherein the operation field is configured to indicate data information of the vector logical operation instruction;
wherein the data information comprises a register unit number, and the vector logical operation unit is configured to access a register unit and to acquire a vector address according to the register unit number;
wherein a start address and a length of the vector can be obtained from the register unit according to the register unit number, for obtaining the vector stored in a corresponding address from the storage unit according to the start address and the length of the vector.

2. The device of claim 1, further comprising:
an instruction cache unit, configured to store vector logical operation instructions to be executed.

3. The device of claim 2, further comprising:
an instruction processing unit, configured
to acquire a vector logical operation instruction from the instruction cache unit,
to process the vector logical operation instruction acquired from the instruction cache unit, and
to provide the vector logical operation instruction processed for the vector logical operation unit.

4. The device of claim 3, wherein the instruction processing unit comprises:
an instruction fetching module, configured to acquire the vector logical operation instruction from the instruction cache unit;
a decoding module, configured to decode the vector logical operation instruction acquired from the instruction cache unit; and
an instruction queue, configured to sequentially store the vector logical operation instruction decoded.

5. The device of claim 1, further comprising a dependency relationship processing unit configured to:
determine whether the vector logical operation instruction accesses the same vector as a previous vector logical operation instruction, before the vector logical operation unit acquires the vector logical operation instruction; and
store the vector logical operation instruction into a storage queue based on a determination that the vector logical operation instruction accesses the same vector as the previous vector logical operation instruction, and provide the vector logical operation instruction in the storage queue for the vector logical operation unit after execution of the previous vector logical operation instruction is completed; or
provide the vector logical operation instruction for the vector logical operation unit directly, based on a determination that the vector logical operation instruction does not access the same vector as the previous vector logical operation instruction.

6. The device of claim 1, wherein the storage unit is further configured to store the result of the vector logical operation.

7. The device of claim 6, further comprising:
an input/output, I/O, unit, configured to store the vectors into the storage unit, or to acquire the result of the vector logical operation from the storage unit.

8. The device of claim 1, wherein the vector logical operation instruction comprises at least one of the following:
a vector AND vector, VAV, instruction, wherein the device is configured to respectively retrieve vector data of a specified size from specified addresses of the storage unit, to perform a contrapuntal AND operation on two vectors in the vector logical operation unit, to write back a result into a specified address of the storage unit, according to said instruction;
a vector AND, VAND, instruction, wherein the device is configured to retrieve vector data of a specified size from a specified address of the storage unit, to perform an AND operation on each element of a vector in the vector logical operation unit, to write back a result into a specified address of a scalar register file, according to said instruction;
a vector OR vector, VOV, instruction, wherein the device is configured to respectively retrieve vector data of a specified size from specified addresses of the storage unit, to perform a contrapuntal OR operation on two vectors in the vector logical operation unit, to write back a result into a specified address of the storage unit, according to said instruction;
a vector OR, VOR, instruction, wherein the device is configured to retrieve vector data of a specified size from a specified address of the storage unit, to perform an OR operation on each element of a vector in the vector logical operation unit, to write back a result into a specified address of a scalar register file, according to said instruction;
a vector retrieval, VR, instruction, wherein the device is configured to retrieve vector data of a specified size from a specified address of the storage unit, to extract an element of a vector according to a specified position to serve as an output in the vector logical operation unit, to write back a result into a specified address of a scalar register file, according to said instruction;
a vector load, VLOAD, instruction, wherein the device is configured to load vector data of a specified size from a specified external source address to a specified address of the storage unit, according to said instruction;
a vector storage, VS, instruction, wherein the device is configured to store vector data of a specified size from a specified address of the storage unit into an external destination address, according to said instruction; and
a vector movement, VMOVE, instruction, wherein the device is configured to store vector data of a specified size from a specified address of the storage unit into another specified address of the storage unit, according to said instruction.

9. The device of claim 1 or 8, wherein the storage unit is a scratchpad memory.

10. The device of claim 1, wherein the vector logical operation unit comprises a vector AND vector, VAV, section, a vector AND, VAND, section, a vector OR vector, VOV, section, and a vector OR, VOR, section.

11. The device of claim 10, wherein the vector logical operation unit has a structure of multiple-stage pipeline, and the structure of multiple-stage pipeline comprises a first stage pipeline and a second stage pipeline; wherein the vector AND vector, VAV, section and the vector OR vector, VOV, section are arranged in the first stage pipeline, and the vector AND, VAND, section and the vector OR, VOR, section are arranged in the second stage pipeline.

12. A vector logical operation method, configured to perform a vector logical operation according to a vector logical operation instruction, the method comprising:
S1, storing vectors by using a storage unit;
S2, storing vector addresses by using a register unit; and
S3, by using a vector logical operation unit, acquiring the vector logical operation instruction, acquiring vector addresses according to the vector logical operation instruction, acquiring vectors according to the vector addresses acquired, and performing the vector logical operation on the vectors acquired to obtain a result of the vector logical operation;
wherein the vector logical operation instruction comprises an operation code and at least one operation field; wherein the operation code is configured to indicate a function of the vector logical operation instruction and the operation field is configured to indicate data information of the vector logical operation instruction;
wherein the data information comprises a register unit number, and the vector logical operation unit is configured to access a register unit and to acquire a vector address according to the register unit number;
wherein a start address and a length of the vector can be obtained from the register unit according to the register unit number, for obtaining the vector stored in a corresponding address from the storage unit according to the start address and the length of the vector.

13. The method of claim 12, further comprising the following acts prior to the operation S3:
storing vector logical operation instructions by using an instruction cache unit.

14. The method of claim 13, further comprising: acquiring, by using an instruction processing unit, a vector logical operation instruction from the vector logical operation instructions stored.

15. The method of claim 14, further comprising: decoding, by using a decoding module, the vector logical operation instruction acquired; and
sequentially storing, by using an instruction queue, the vector logical operation instruction decoded.

16. The method of claim 12, further comprising, by using a dependency relationship processing unit, the following acts prior to the operation S3:
determining whether the vector logical operation instruction accesses the same vector as a previous vector logical operation instruction; and
storing the vector logical operation instruction into a storage queue based on a determination that the vector logical operation instruction accesses the same vector as the previous vector logical operation instruction, and advancing to the operation S3 after execution of the previous vector logical operation instruction is completed; or
advancing to the operation S3 directly, based on a determination that the vector logical operation instruction does not access the same vector as the previous vector logical operation instruction.

17. The method of claim 12, further comprising:
storing the result of the vector logical operation.

18. The method of claim 12, wherein the operation S1 comprises:
storing the vectors into a scratchpad memory.

19. The method of claim 17 or 18, further comprising:
storing, by an input/output, I/O, unit, the vectors into the storage unit, or
acquiring the result of the vector logical operation from the storage unit.

20. The method of claim 12, wherein the vector logical operation comprises a vector AND vector, VAV, operation, a vector AND, VAND, operation, a vector OR vector, VOV, operation, and a vector OR, VOR, operation.

21. The method of claim 20, wherein the vector logical operation unit has a structure of multiple-stage pipeline, and the structure of multiple-stage pipeline comprises a first stage pipeline and a second stage pipeline; wherein the vector AND vector, VAV, operation and the vector OR vector, VOV, operation are performed at the first stage pipeline, and the vector AND, VAND, operation and the vector OR, VOR, operation are performed at the second stage pipeline.

22. The method of any one of the preceding claims 12-21, wherein the vector logical operation instruction comprises at least one of the following:
a vector AND vector, VAV, instruction, wherein the method further comprises:
respectively retrieving vector data of a specified size from specified addresses of the storage unit,
performing a contrapuntal AND operation on two vectors in the vector logical operation unit, and
writing back a result into a specified address of the storage unit, according to said instruction;
a vector AND, VAND, instruction, wherein the method further comprises:
retrieving vector data of a specified size from a specified address of the storage unit,
performing an AND operation on each element of a vector in the vector logical operation unit, and
writing back a result into a specified address of a scalar register file, according to said instruction;
a vector OR vector, VOV, instruction, wherein the method further comprises:
respectively retrieving vector data of a specified size from specified addresses of the storage unit,
performing a contrapuntal OR operation on two vectors in the vector logical operation unit, and
writing back a result into a specified address of the storage unit, according to said instruction;
a vector OR, VOR, instruction, wherein the method further comprises:
retrieving vector data of a specified size from a specified address of the storage unit,
performing an OR operation on each element of a vector in the vector logical operation unit, and
writing back a result into a specified address of a scalar register file, according to said instruction;
a vector retrieval, VR, instruction, wherein the method further comprises:
retrieving vector data of a specified size from a specified address of the storage unit,
extracting an element of a vector according to a specified position to serve as an output in the vector logical operation unit, and
writing back a result into a specified address of a scalar register file, according to said instruction;
a vector load, VLOAD, instruction, wherein the method further comprises:
loading vector data of a specified size from a specified external source address to a specified address of the storage unit, according to said instruction;
a vector storage, VS, instruction, wherein the method further comprises:
storing vector data of a specified size from a specified address of the storage unit into an external destination address, according to said instruction; and
a vector movement, VMOVE, instruction, wherein the method further comprises:
storing vector data of a specified size from a specified address of the storage unit into another specified address of the storage unit, according to said instruction.

## Patentansprüche

1. Vektorlogische-Operations-Einrichtung, ausgelegt zum Durchführen einer vektorlogischen Operation gemäß einer Vektorlogischen-Operations-Anweisung, wobei die Einrichtung umfasst:
eine Ablageeinheit, ausgelegt zum Ablegen von Vektoren;
eine Registereinheit, ausgelegt zum Ablegen von Vektoradressen, wobei die Vektoradressen Adressen der in der Ablageeinheit abgelegten Vektoren sind; und
eine Vektorlogische-Operations-Einheit, ausgelegt zum Erfassen der Vektorlogischen-Operations-Anweisung, zum Erfassen von Vektoradressen aus der Registereinheit gemäß der Vektorlogischen-Operations-Anweisung, zum Erfassen von Vektoren aus der Ablageeinheit gemäß den erfassten Vektoradressen und zum Durchführen der vektorlogischen Operation an den erfassten Vektoren, um ein Ergebnis der vektorlogischen Operation zu erhalten;
wobei die Vektorlogische-Operations-Anweisung einen Operationscode und mindestens ein Operationsfeld umfasst;
wobei der Operationscode ausgelegt ist zum Anzeigen einer Funktion der Vektorlogischen-Operations-Anweisung; und
wobei das Operationsfeld ausgelegt ist zum Anzeigen von Dateninformationen der Vektorlogischen-Operations-Anweisung;
wobei die Dateninformationen eine Registereinheitsnummer umfassen und die Vektorlogische-Operations-Einheit ausgelegt ist zum Zugreifen auf eine Registereinheit und zum Erfassen einer Vektoradresse gemäß der Registereinheitsnummer;
wobei eine Startadresse und eine Länge des Vektors aus der Registereinheit gemäß der Registereinheitsnummer erhalten werden können zum Erhalten des in einer entsprechenden Adresse abgelegten Vektors von der Ablageeinheit gemäß der Startadresse und der Länge des Vektors.

2. Einrichtung nach Anspruch 1, weiter umfassend:
eine Anweisungszwischenspeichereinheit, ausgelegt zum Ablegen von auszuführenden Vektorlogischen-Operations-Anweisungen.

3. Einrichtung nach Anspruch 2, weiter umfassend:
eine Anweisungsverarbeitungseinheit, ausgelegt
zum Erfassen einer Vektorlogischen-Operations-Anweisung von der Anweisungszwischenspeichereinheit,
zum Verarbeiten der von der Anweisungszwischenspeichereinheit erfassten Vektorlogischen-Operations-Anweisung, und
zum Bereitstellen der verarbeiteten Vektorlogischen-Operations-Anweisung für die Vektorlogische-Operations-Einheit.

4. Einrichtung nach Anspruch 3, wobei die Anweisungsverarbeitungseinheit umfasst:
ein Anweisungsholmodul, ausgelegt zum Erfassen der Vektorlogischen-Operations-Anweisung von der Anweisungszwischenspeichereinheit;
ein Decodiermodul, ausgelegt zum Decodieren der von der Anweisungszwischenspeichereinheit erfassten Vektorlogischen-Operations-Anweisung; und
eine Anweisungsschlange, ausgelegt zum sequentiellen Ablegen der decodierten Vektorlogischen-Operations-Anweisung.

5. Einrichtung nach Anspruch 1, weiter umfassend eine Abhängigkeitsbeziehungs-Verarbeitungseinheit, ausgelegt zum:
Bestimmen, ob die Vektorlogische-Operations-Anweisung auf den gleichen Vektor zugreift wie eine vorausgegangene Vektorlogische-Operations-Anweisung, bevor die Vektorlogische-Operations-Einheit die Vektorlogische-Operations-Anweisung erfasst; und
Ablegen der Vektorlogischen-Operations-Anweisung in einer Ablageschlange auf Basis einer Bestimmung, dass die Vektorlogische-Operations-Anweisung auf den gleichen Vektor zugreift wie die vorausgegangene Vektorlogische-Operations-Anweisung, und Bereitstellen der Vektorlogische-Operations-Anweisung in der Ablageschlange für die Vektorlogische-Operations-Einheit nachdem die Ausführung der vorausgegangenen Vektorlogischen-Operations-Anweisung abgeschlossen ist; oder
Bereitstellen der Vektorlogischen-Operations-Anweisung für die Vektorlogische-Operations-Einheit direkt, auf Basis einer Bestimmung, dass die Vektorlogische-Operations-Anweisung nicht auf den gleichen Vektor wie die vorausgegangene Vektorlogische-Operations-Anweisung zugreift.

6. Einrichtung nach Anspruch 1, wobei die Ablageeinheit weiter ausgelegt ist zum Ablegen des Ergebnisses der vektorlogischen Operation.

7. Einrichtung nach Anspruch 6, weiter umfassend:
eine Eingabe-/Ausgabe-, I/O-, Einheit, ausgelegt zum Ablegen der Vektoren in der Ablageeinheit oder zum Erfassen des Ergebnisses der vektorlogischen Operation aus der Ablageeinheit.

8. Einrichtung nach Anspruch 1, wobei die Vektorlogische-Operations-Anweisung mindestens eine der folgenden umfasst:
eine Vektor-AND-Vektor-, VAV-, Anweisung, wobei die Einrichtung ausgelegt ist zum jeweiligen Abrufen von Vektordaten einer spezifizierten Größe aus spezifizierten Adressen der Ablageeinheit, zum Durchführen einer kontrapunktischen AND-Operation an zwei Vektoren in der Vektorlogische-Operations-Einheit, zum Zurückschreiben eines Ergebnisses in eine spezifizierte Adresse der Ablageeinheit, gemäß der Anweisung;
eine Vektor-AND-, VAND-, Anweisung, wobei die Einrichtung ausgelegt ist zum Abrufen von Vektordaten einer spezifizierten Größe aus einer spezifizierten Adresse der Ablageeinheit, zum Durchführen einer AND-Operation an jedem Element eines Vektors in der Vektorlogischen-Operations-Einheit, zum Zurückschreiben eines Ergebnisses in eine spezifizierte Adresse einer skalaren Registerdatei, gemäß der Anweisung;
eine Vektor-OR-Vektor-, VOV-, Anweisung, wobei die Einrichtung ausgelegt ist zum jeweiligen Abrufen von Vektordaten einer spezifizierten Größe von spezifizierten Adressen der Ablageeinheit, zum Durchführen einer kontrapunktischen OR-Operation an zwei Vektoren in der Vektorlogischen-Operations-Einheit, zum Zurückschreiben eines Ergebnisses in eine spezifizierte Adresse der Ablageeinheit, gemäß der Anweisung;
eine Vektor-OR-, VOR-, Anweisung, wobei die Einrichtung ausgelegt ist zum Abrufen von Vektordaten einer spezifizierten Größe von einer spezifizierten Adresse der Ablageeinheit, zum Durchführen einer OR-Operation an jedem Element eines Vektors in der Vektorlogischen-Operations-Einheit, zum Zurückschreiben eines Ergebnisses in eine spezifizierte Adresse einer skalaren Registerdatei, gemäß der Anweisung;
eine Vektorabruf-, VR-, Anweisung, wobei die Einrichtung ausgelegt ist zum Abrufen von Vektordaten einer spezifizierten Größe von einer spezifizierten Adresse der Ablageeinheit, zum Extrahieren eines Elements eines Vektors gemäß einer spezifizierten Position zum Dienen als eine Ausgabe der Vektorlogischen-Operations-Einheit, zum Zurückschreiben eines Ergebnisses in eine spezifizierte Adresse einer skalaren Registerdatei, gemäß der Anweisung;
eine Vektorlast-, VLOAD-, Anweisung, wobei die Einrichtung ausgelegt ist zum Laden von Vektordaten einer spezifizierten Größe von einer spezifizierten externen Quelladresse zu einer spezifizierten Adresse der Ablageeinheit, gemäß der Anweisung;
eine Vektorablage-, VS-, Anweisung, wobei die Einrichtung ausgelegt ist zum Ablegen von Vektordaten einer spezifizierten Größe von einer spezifizierten Adresse der Ablageeinheit in einer externen Zieladresse, gemäß der Anweisung; und
eine Vektorbewegungs-, VMOVE-, Anweisung, wobei die Einrichtung ausgelegt ist zum Speichern von Vektordaten einer spezifizierten Größe von einer spezifizierten Adresse der Ablageeinheit in einer anderen spezifizierten Adresse der Ablageeinheit, gemäß der Anweisung.

9. Einrichtung nach Anspruch 1 oder 8, wobei die Ablageeinheit ein Scratchpad-Speicher ist.

10. Einrichtung nach Anspruch 1, wobei die Vektorlogische-Operations-Einheit eine Vektor-AND-Vektor-, VAV-, Sektion, eine Vektor-AND-, VAND-, Sektion, eine Vektor-OR-Vektor-, VOV-, Sektion und eine Vektor-OR-, VOR-, Sektion umfasst.

11. Einrichtung nach Anspruch 10, wobei die Vektorlogische-Operations-Einheit eine Struktur einer mehrstufigen Pipeline aufweist und die Struktur der mehrstufigen Pipeline eine Erste-Stufe-Pipeline und eine Zweite-Stufe-Pipeline umfasst, wobei die Vektor-AND-Vektor-, VAV-, Sektion und die Vektor-OR-Vektor-, VOV-Sektion in der Erste-Stufe-Pipeline angeordnet sind und die Vektor-AND-, VAND-, Sektion und die Vektor-OR-, VOR-, Sektion in der Zweite-Stufe-Pipeline angeordnet sind.

12. Vektorlogisches-Operations-Verfahren, ausgelegt zum Durchführen einer vektorlogischen Operation gemäß einer Vektorlogischen-Operations-Anweisung, wobei das Verfahren umfasst:
S1, Ablegen von Vektoren unter Verwendung einer Ablageeinheit;
S2, Ablegen von Vektoradressen unter Verwendung einer Registereinheit; und
S3, unter Verwendung einer Vektorlogischen-Operations-Einheit, Erfassen der Vektorlogischen-Operations-Anweisung, Erfassen von Vektoradressen gemäß der Vektorlogischen-Operations-Anweisung, Erfassen von Vektoren gemäß den erfassten Vektoradressen und Durchführen der vektorlogischen Operation an den erfassten Vektoren, um ein Ergebnis der vektorlogischen Operation zu erhalten;
wobei die Vektorlogische-Operations-Anweisung einen Operationscode und mindestens ein Operationsfeld umfasst; wobei der Operationscode ausgelegt ist zum Anzeigen einer Funktion der Vektorlogischen-Operations-Anweisung und das Operationsfeld ausgelegt ist zum Anzeigen von Dateninformationen der Vektorlogischen-Operations-Anweisung;
wobei die Dateninformationen eine Registereinheitsnummer umfassen und die Vektorlogische-Operations-Einheit ausgelegt ist zum Zugreifen auf eine Registereinheit und zum Erfassen einer Vektoradresse gemäß der Registereinheitsnummer;
wobei eine Startadresse und eine Länge des Vektors aus der Registereinheit gemäß der Registereinheitsnummer erhalten werden können zum Erhalten des in einer entsprechenden Adresse abgelegten Vektors von der Ablageeinheit gemäß der Startadresse und der Länge des Vektors.

13. Verfahren nach Anspruch 12, weiter umfassend die folgenden Handlungen vor der Operation S3:
Ablegen der Vektorlogischen-Operations-Anweisungen unter Verwendung einer Anweisungszwischenspeichereinheit.

14. Verfahren nach Anspruch 13, weiter umfassend:
Erfassen, unter Verwendung einer Anweisungsverarbeitungseinheit, einer Vektorlogischen-Operations-Anweisung von den gespeicherten Vektorlogischen-Operations-Anweisungen.

15. Verfahren nach Anspruch 14, weiter umfassend:
Decodieren, unter Verwendung eines Decodiermoduls, der erfassten Vektorlogischen-Operations-Anweisung; und
sequentielles Ablegen, unter Verwendung einer Anweisungsschlange, der decodierten Vektorlogischen-Operations-Anweisung.

16. Verfahren nach Anspruch 12, weiter umfassend, unter Verwendung einer Abhängigkeitsbeziehungs-Verarbeitungseinheit, der folgenden Handlungen vor der Operation S3:
Bestimmen, ob die Vektorlogische-Operations-Anweisung auf den gleichen Vektor zugreift wie eine vorausgegangene Vektorlogische-Operations-Anweisung; und
Ablegen der Vektorlogischen-Operations-Anweisung in einer Ablageschlange auf Basis einer Bestimmung, dass die Vektorlogische-Operations-Anweisung auf den gleichen Vektor zugreift wie die vorausgegangene Vektorlogische-Operations-Anweisung, und Fortschreiten zu der Operation S3, nachdem die Ausführung der vorausgegangenen Vektorlogischen-Operations-Anweisung abgeschlossen ist; oder
Fortschreiten direkt zu der Operation S3, auf Basis einer Bestimmung, dass die Vektorlogische-Operations-Anweisung nicht auf den gleichen Vektor zugreift wie die vorausgegangene Vektorlogische-Operations-Anweisung.

17. Verfahren nach Anspruch 12, weiter umfassend:
Ablegen des Ergebnisses der vektorlogischen Operation.

18. Verfahren nach Anspruch 12, wobei die Operation S1 umfasst:
Ablegen der Vektoren in einem Scratchpad-Speicher.

19. Verfahren nach Anspruch 17 oder 18, weiter umfassend:
Ablegen, durch eine Eingabe-/Ausgabe-, I/O-, Einheit der Vektoren in der Ablageeinheit, oder
Erfassen des Ergebnisses der vektorlogischen Operation aus der Ablageeinheit.

20. Verfahren nach Anspruch 12, wobei die Vektorlogische-Operations-Einheit eine Vektor-AND-Vektor-, VAV-, Operation, eine Vektor-AND-, VAND-, Operation, eine Vektor-OR-Vektor-, VOV-, Operation und eine Vektor-OR-, VOR-, Operation umfasst.

21. Verfahren nach Anspruch 20, wobei die Vektorlogische-Operations-Einheit eine Struktur einer mehrstufigen Pipeline aufweist und die Struktur der mehrstufigen Pipeline eine Erste-Stufe-Pipeline und eine Zweite-Stufe-Pipeline umfasst, wobei die Vektor-AND-Vektor-, VAV-, Operation und die Vektor-OR-Vektor-, VOV-Operation in der Erste-Stufe-Pipeline durchgeführt werden und die Vektor-AND-, VAND-, Operation und die Vektor-OR-, VOR-, Operation in der Zweite-Stufe-Pipeline durchgeführt werden.

22. Verfahren nach einem der vorhergehenden Ansprüche 12-21, wobei die Vektorlogische-Operations-Anweisung mindestens eine der folgenden umfasst:
eine Vektor-AND-Vektor-, VAV-, Anweisung, wobei das Verfahren weiter umfasst:
jeweiliges Abrufen von Vektordaten einer spezifizierten Größe von spezifizierten Adressen der Ablageeinheit,
Durchführen einer kontrapunktischen AND-Operation an zwei Vektoren in der Vektorlogischen-Operations-Einheit, und
Zurückschreiben eines Ergebnisses in eine spezifizierte Adresse der Ablageeinheit, gemäß der Anweisung;
eine Vektor-AND-, VAND-, Anweisung, wobei das Verfahren weiter umfasst:
Abrufen von Vektordaten einer spezifizierten Größe von einer spezifizierten Adresse der Ablageeinheit,
Durchführen einer AND-Operation an jedem Element eines Vektors in der Vektorlogischen-Operations-Einheit, und
Zurückschreiben eines Ergebnisses in eine spezifizierte Adresse einer skalaren Registerdatei, gemäß der Anweisung;
eine Vektor-OR-Vektor-, VOV-, Anweisung, wobei das Verfahren weiter umfasst:
jeweiliges Abrufen von Vektordaten einer spezifizierten Größe von spezifizierten Adressen der Ablageeinheit;
Durchführen einer kontrapunktischen OR-Operation an zwei Vektoren in der Vektorlogischen-Operations-Einheit, und
Zurückschreiben eines Ergebnisses in eine spezifizierte Adresse der Ablageeinheit, gemäß der Anweisung;
eine Vektor-OR-, VOR-, Anweisung, wobei das Verfahren weiter umfasst:
Abrufen von Vektordaten einer spezifizierten Größe von einer spezifizierten Adresse der Ablageeinheit,
Durchführen einer OR-Operation an jedem Element eines Vektors in der Vektorlogischen-Operations-Einheit, und
Zurückschreiben eines Ergebnisses in eine spezifizierte Adresse einer skalaren Registerdatei, gemäß der Anweisung;
eine Vektorabruf-, VR-Anweisung, wobei das Verfahren weiter umfasst:
Abrufen von Vektordaten einer spezifizierten Größe von einer spezifizierten Adresse der Ablageeinheit,
Extrahieren eines Elements eines Vektors gemäß einer spezifizierten Position zum Dienen als eine Ausgabe in der Vektorlogischen-Operations-Einheit, und
Zurückschreiben eines Ergebnisses in eine spezifizierte Adresse einer skalaren Registerdatei, gemäß der Anweisung;
eine Vektorlast-, VLOAD-, Anweisung, wobei das Verfahren weiter umfasst:
Laden von Vektordaten einer spezifizierten Größe von einer spezifizierten externen Quelladresse zu einer spezifizierten Adresse der Ablageeinheit, gemäß der Anweisung;
eine Vektorablage-, VS-Anweisung, wobei das Verfahren weiter umfasst:
Ablegen von Vektordaten einer spezifizierten Größe von einer spezifizierten Adresse der Ablageeinheit in einer externen Zieladresse, gemäß der Anweisung; und
eine Vektorbewegungs-, VMOVE-, Anweisung, wobei das Verfahren weiter umfasst:
Ablegen von Vektordaten einer spezifizierten Größe von einer spezifizierten Adresse der Ablageeinheit in einer anderen spezifizierten Adresse der Ablageeinheit, gemäß der Anweisung.

## Revendications

1. Dispositif d'opération logique vectorielle, configuré pour réaliser une opération logique vectorielle conformément à une instruction d'opération logique vectorielle, le dispositif comprenant :
une unité de stockage, configurée pour stocker des vecteurs ;
une unité de registre, configurée pour stocker des adresses vectorielles, les adresses vectorielles étant des adresses des vecteurs stockés dans l'unité de stockage ; et
une unité d'opération logique vectorielle, configurée pour acquérir l'instruction d'opération logique vectorielle, acquérir des adresses vectorielles à partir de l'unité de registre conformément à l'instruction d'opération logique vectorielle, acquérir des vecteurs à partir de l'unité de stockage conformément aux adresses vectorielles acquises, et réaliser l'opération logique vectorielle sur les vecteurs acquis pour obtenir un résultat de l'opération logique vectorielle ;
dans lequel l'instruction d'opération logique vectorielle comprend un code d'opération et au moins un champ d'opération ;
dans lequel le code d'opération est configuré pour indiquer une fonction de l'instruction d'opération logique vectorielle ; et
dans lequel le champ d'opération est configuré pour indiquer des informations de données de l'instruction d'opération logique vectorielle ;
dans lequel les informations de données comprennent un numéro d'unité de registre, et l'unité d'opération logique vectorielle est configurée pour accéder à une unité de registre et acquérir une adresse vectorielle conformément au numéro d'unité de registre ;
dans lequel une adresse de début et une longueur du vecteur peuvent être obtenues à partir de l'unité de registre conformément au numéro d'unité de registre, pour obtenir le vecteur stocké à une adresse correspondante à partir de l'unité de stockage conformément à l'adresse de début et à la longueur du vecteur.

2. Dispositif selon la revendication 1, comprenant en outre :
une unité d'antémémoire d'instructions, configurée pour stocker des instructions d'opérations logiques vectorielles à exécuter.

3. Dispositif selon la revendication 2, comprenant en outre :
une unité de traitement d'instruction, configurée pour acquérir une instruction d'opération logique vectorielle à partir de l'unité d'antémémoire d'instructions,
traiter l'instruction d'opération logique vectorielle acquise à partir de l'unité d'antémémoire d'instructions, et
fournir l'instruction d'opération logique vectorielle traitée à l'unité d'opération logique vectorielle.

4. Dispositif selon la revendication 3, dans lequel l'unité de traitement d'instruction comprend :
un module d'obtention d'instruction, configuré pour acquérir l'instruction d'opération logique vectorielle à partir de l'unité d'antémémoire d'instructions ;
un module de décodage, configuré pour décoder l'instruction d'opération logique vectorielle acquise à partir de l'unité d'antémémoire d'instructions; et
une file d'attente d'instructions, configurée pour stocker séquentiellement l'instruction d'opération logique vectorielle décodée.

5. Dispositif selon la revendication 1, comprenant en outre une unité de traitement de relation de dépendance configurée pour :
déterminer que l'instruction d'opération logique vectorielle accède au même vecteur qu'une instruction d'opération logique vectorielle précédente, avant que l'unité d'opération logique vectorielle acquière l'instruction d'opération logique vectorielle ; et
stocker l'instruction d'opération logique vectorielle dans une file d'attente de stockage en fonction d'une détermination que l'instruction d'opération logique vectorielle accède au même vecteur que l'instruction d'opération logique vectorielle précédente, et fournir l'instruction d'opération logique vectorielle dans la file d'attente de stockage à l'unité d'opération logique vectorielle au terme de l'exécution de l'instruction d'opération logique vectorielle précédente ; ou
fournir l'instruction d'opération logique vectorielle à l'unité d'opération logique vectorielle directement, en fonction d'une détermination que l'instruction d'opération logique vectorielle n'accède pas au même vecteur que l'instruction d'opération logique vectorielle précédente.

6. Dispositif selon la revendication 1, dans lequel l'unité de stockage est configurée en outre pour stocker le résultat de l'opération logique vectorielle.

7. Dispositif selon la revendication 6, comprenant en outre :
une unité d'entrée/sortie, E/S, configurée pour stocker les vecteurs dans l'unité de stockage, ou acquérir le résultat de l'opération logique vectorielle à partir de l'unité de stockage.

8. Dispositif selon la revendication 1, dans lequel l'instruction d'opération logique vectorielle comprend au moins :
une instruction vecteur ET vecteur, VAV, selon laquelle le dispositif est configuré pour respectivement recouvrer des données vectorielles d'une taille spécifiée à partir d'adresses spécifiées de l'unité de stockage, réaliser une opération ET en contrepoint sur deux vecteurs dans l'unité d'opération logique vectorielle, écrire en retour un résultat à l'adresse spécifiée de l'unité de stockage, conformément à ladite instruction ;
une instruction vecteur ET, VAND, selon laquelle le dispositif est configuré pour recouvrer des données vectorielles d'une taille spécifiée à partir d'une adresse spécifiée de l'unité de stockage, réaliser une opération ET sur chaque élément d'un vecteur dans l'unité d'opération logique vectorielle, écrire en retour un résultat à une adresse spécifiée d'un fichier de registre scalaire, conformément à ladite instruction ;
une instruction vecteur OU vecteur, VOV, selon laquelle le dispositif est configuré pour recouvrer respectivement des données de vecteur d'une taille spécifiée à partir d'adresses spécifiées de l'unité de stockage, réaliser une opération OU en contrepoint sur deux vecteurs dans l'unité d'opération logique vectorielle, écrire en retour un résultat à une adresse spécifiée de l'unité de stockage, conformément à ladite instruction ;
une instruction vecteur OU, VOR, selon laquelle le dispositif est configuré pour recouvrer des données vectorielles d'une taille spécifiée à partir d'une adresse spécifiée de l'unité de stockage, réaliser une opération OU sur chaque élément d'un vecteur dans l'unité d'opération logique vectorielle, écrire en retour un résultat à une adresse spécifiée d'un fichier de registre scalaire, conformément à ladite instruction ;
une instruction de recouvrement de vecteur, VR, selon laquelle le dispositif est configuré pour recouvrer des données vectorielles d'une taille spécifiée à partir d'une adresse spécifiée de l'unité de stockage, extraire un élément d'un vecteur conformément à une position spécifiée pour qu'il serve de sortie dans l'unité d'opération logique vectorielle, écrire en retour un résultat à une adresse spécifiée d'un fichier de registre scalaire, conformément à ladite instruction ;
une instruction de chargement de vecteur, VLOAD, selon laquelle le dispositif est configuré pour charger des données vectorielles d'une taille spécifiée d'une adresse source externe spécifiée à une adresse spécifiée de l'unité de stockage, conformément à ladite instruction ;
une instruction de stockage de vecteur, VS, selon laquelle le dispositif est configuré pour stocker des données vectorielles d'une taille spécifiée d'une adresse spécifiée de l'unité de stockage à une adresse de destination externe, conformément à ladite instruction ; et
une instruction de mouvement de vecteur, VMOVE, selon laquelle le dispositif est configuré pour stocker des données vectorielles d'une taille spécifiée d'une adresse spécifiée de l'unité de stockage à une autre adresse spécifiée de l'unité de stockage, conformément à ladite instruction.

9. Dispositif selon la revendication 1 ou 8, dans lequel l'unité de stockage est une mémoire bloc-notes.

10. Dispositif selon la revendication 1, dans lequel l'unité d'opération logique vectorielle comprend une section vecteur ET vecteur, VAV, une section vecteur ET, VAND, une section vecteur OU vecteur, VOV, et une section vecteur OU.

11. Dispositif selon la revendication 10, dans lequel l'unité d'opération logique vectorielle a une structure de pipeline à étages multiples, et la structure de pipeline à étages multiples comprend un premier étage de pipeline et un second étage de pipeline ; dans lequel la section vecteur ET vecteur, VAV, et la section vecteur OU vecteur, VOV, sont disposées dans le premier étage du pipeline et la section vecteur ET, VAND, et la section vecteur OU, VOR, sont disposées dans le second étage de pipeline.

12. Procédé d'opération logique vectorielle, configuré pour réaliser une opération logique vectorielle conformément à une instruction d'opération logique vectorielle, le procédé comprenant :
S1, le stockage de vecteurs à l'aide d'une unité de stockage ;
S2, le stockage d'adresses vectorielles à l'aide d'une unité de registre ; et
S3, à l'aide d'une unité d'opération logique vectorielle, l'acquisition de l'instruction d'opération logique vectorielle, l'acquisition d'adresses vectorielles conformément à l'instruction d'opération logique vectorielle, l'acquisition de vecteurs conformément aux adresses vectorielles acquises, et la réalisation de l'opération logique vectorielle sur les vecteurs acquis pour obtenir un résultat de l'opération logique vectorielle ;
dans lequel l'instruction d'opération logique vectorielle comprend un code d'opération et au moins un champ d'opération ; dans lequel le code d'opération est configuré pour indiquer une fonction de l'instruction d'opération logique vectorielle et le champ d'opération est configuré pour indiquer des informations de données de l'instruction d'opération logique vectorielle ;
dans lequel les informations de données comprennent un numéro d'unité de registre, et l'unité d'opération logique vectorielle est configurée pour accéder à une unité de registre et acquérir une adresse vectorielle conformément au numéro d'unité de registre ;
dans lequel une adresse de début et une longueur du vecteur peuvent être obtenues à partir de l'unité de registre conformément au numéro d'unité de registre, pour obtenir le vecteur stocké à une adresse correspondante à partir de l'unité de stockage conformément à l'adresse de début et à la longueur du vecteur.

13. Procédé selon la revendication 12, comprenant en outre les actions suivantes avant l'opération S3 :
le stockage d'instructions d'opérations logiques vectorielles à l'aide d'une unité d'antémémoire d'instructions.

14. Procédé selon la revendication 13, comprenant en outre : l'acquisition, à l'aide d'une unité de traitement d'instruction, d'une instruction d'opération logique vectorielle à partir des instructions d'opérations logiques vectorielles stockées.

15. Procédé selon la revendication 14, comprenant en outre :
le décodage, à l'aide d'un module de décodage, de l'instruction d'opération logique vectorielle acquise ; et
le stockage séquentiel, à l'aide d'une file d'attente d'instructions, de l'instruction d'opération logique vectorielle décodée.

16. Procédé selon la revendication 12, comprenant en outre , à l'aide d'une unité de traitement de relation de dépendance, les actions suivantes avant l'opération S3 :
la détermination que l'instruction d'opération logique vectorielle accède ou non au même vecteur qu'une instruction d'opération logique vectorielle précédente ; et
le stockage de l'instruction d'opération logique vectorielle dans une file d'attente de stockage en fonction d'une détermination que l'instruction d'opération logique vectorielle accède au même vecteur que l'instruction d'opération logique vectorielle précédente, et
le passage à l'opération S3 au terme de l'exécution de l'instruction d'opération logique vectorielle précédente ; ou
le passage direct à l'opération S3, en fonction d'une détermination que l'instruction d'opération logique vectorielle n'accède pas au même vecteur que l'instruction d'opération logique vectorielle précédente.

17. Procédé selon la revendication 12, comprenant en outre :
le stockage du résultat de l'opération logique vectorielle.

18. Procédé selon la revendication 12, dans lequel l'opération S1 comprend :
le stockage des vecteurs dans une mémoire bloc-notes.

19. Procédé selon la revendication 17 ou 18, comprenant en outre :
le stockage, par une unité d'entrée/sortie, E/S, des vecteurs dans l'unité de stockage, ou
l'acquisition du résultat de l'opération logique vectorielle à partir de l'unité de stockage.

20. Procédé selon la revendication 12, dans lequel l'opération logique vectorielle comprend une opération vecteur ET vecteur, VAV, une opération vecteur ET, VAND, une opération vecteur OU vecteur, VOV, et une opération vecteur OU, VOR.

21. Procédé selon la revendication 20, dans lequel l'unité d'opération logique vectorielle a une structure de pipeline à étages multiples, et la structure de pipeline à étages multiples comprend un premier étage de pipeline et un second étage de pipeline ; dans lequel l'opération vecteur ET vecteur, VAV, et l'opération vecteur OU vecteur, VOV, sont réalisées au niveau du premier étage du pipeline et l'opération vecteur ET, VAND, et l'opération vecteur OU, VOR, sont réalisées au niveau du second étage de pipeline.

22. Procédé selon l'une quelconque des revendications précédentes 12 à 21, dans lequel l'instruction d'opération logique vectorielle comprend au moins :
une instruction vecteur ET vecteur, VAV, selon laquelle le procédé comprend en outre :
le recouvrement respectif de données vectorielles d'une taille spécifiée à partir d'adresses spécifiées de l'unité de stockage,
la réalisation d'une opération ET en contrepoint sur deux vecteurs dans l'unité d'opération logique vectorielle, et
l'écriture en retour d'un résultat à l'adresse spécifiée de l'unité de stockage, conformément à ladite instruction ;
une instruction vecteur ET, VAND, selon laquelle le procédé comprend en outre :
le recouvrement de données vectorielles d'une taille spécifiée à partir d'une adresse spécifiée de l'unité de stockage,
la réalisation d'une opération ET sur chaque élément d'un vecteur dans l'unité d'opération logique vectorielle, et
l'écriture en retour d'un résultat à une adresse spécifiée d'un fichier de registre scalaire, conformément à ladite instruction ;
une instruction vecteur OU vecteur, VOV, selon laquelle le procédé comprend en outre :
le recouvrement respectif de données vectorielles d'une taille spécifiée à partir d'adresses spécifiées de l'unité de stockage,
la réalisation d'une opération OU en contrepoint sur deux vecteurs dans l'unité d'opération logique vectorielle, et
l'écriture en retour d'un résultat à une adresse spécifiée de l'unité de stockage, conformément à ladite instruction ;
une instruction vecteur OU, VOR, selon laquelle le procédé comprend en outre :
le recouvrement de données vectorielles d'une taille spécifiée à partir d'une adresse spécifiée de l'unité de stockage,
la réalisation d'une opération OU sur chaque élément d'un vecteur dans l'unité d'opération logique vectorielle, et
l'écriture en retour d'un résultat à une adresse spécifiée d'un fichier de registre scalaire, conformément à ladite instruction ;
une instruction de recouvrement de vecteur, VR, selon laquelle le procédé comprend en outre :
le recouvrement de données vectorielles d'une taille spécifiée à partir d'une adresse spécifiée de l'unité de stockage,
l'extraction d'un élément d'un vecteur conformément à une position spécifiée pour qu'il serve de sortie dans l'unité d'opération logique vectorielle, et
l'écriture en retour d'un résultat à une adresse spécifiée d'un fichier de registre scalaire, conformément à ladite instruction ;
une instruction de chargement de vecteur, VLOAD, selon laquelle le procédé comprend en outre :
le chargement de données vectorielles d'une taille spécifiée d'une adresse source externe spécifiée à une adresse spécifiée de l'unité de stockage, conformément à ladite instruction ;
une instruction de stockage de vecteur, VS, selon laquelle le procédé comprend en outre :
le stockage de données vectorielles d'une taille spécifiée d'une adresse spécifiée de l'unité de stockage à une adresse de destination externe, conformément à ladite instruction ; et
une instruction de mouvement de vecteur, VMOVE, selon laquelle le procédé comprend en outre :
le stockage de données vectorielles d'une taille spécifiée d'une adresse spécifiée de l'unité de stockage à une autre adresse spécifiée de l'unité de stockage, conformément à ladite instruction.
